# EUROPEAN PATENT APPLICATION

(11) **EP 2 866 134 A1**
(43) Date of publication of application: **29.04.2015**
(21) Application number: 14188247.2
(22) Date of filing: 09.10.2014
(51) Int. Cl.: G06F 3/0488, G06F 3/01, G06F 3/041, G06F 3/0482, G06F 3/0346, G06F 3/0484, G06F 3/0481

(54) **Portable electronic device and control method**

(30) Priority: 25.10.2013 JP 2013222800
(71) Applicant: FUJITSU LIMITED, Kawasaki-shi, Kanagawa 211-8588 (JP)
(72) Inventor: Sata, Mitsuyo, Kawasaki-shi,, Kanagawa 211-8588 (JP)
(74) Representative: Schultes, Stephan

(57) **Abstract**

A portable electronic device includes a touchscreen, and a processor, wherein when the processor detects a touch on the touchscreen, the processor makes one of first and second changes or determines a display position of a menu on the touchscreen based on a position on which the touch has actually been made and a state of rotation of the portable electronic device at a certain period preceding the touch, the first change being a change where a touch position is changed from the position on which the touch has actually been made, the second change being a change where a position of a touch detection region on the touchscreen is changed from a reference position.

## Description

### FIELD

The embodiments discussed herein are related to a portable electronic device and control method.

### BACKGROUND

Touchscreen-equipped portable electronic devices, smartphones, have become widespread recently. With the widespread use of smartphones, the screens thereof have been enlarged to increase visibility.

Related-art documents include Japanese Laid-open Patent Publication No. 2011-134120, Japanese Laid-open Patent Publication No. 2009-239410, Japanese Laid-open Patent Publication No. 2012-037963, and International Publication Pamphlet No. WO 2009/031214.

Smartphone users often grasp and operate a smartphone with one hand. Further, users who are grasping a smartphone with one hand often operate the smartphone by touching the touchscreen with only the thumb. For this reason, when a user who is operating a large-screen smartphone, that is, a large-area touchscreen-equipped smartphone with one hand tries to touch the desired position which is distant from the thumb, he or she may touch a position different from the desired position. For example, when a user who is grasping a smartphone with the right hand tries to touch the upper-left corner of the touchscreen with the thumb of the right hand, the fingertip may fail to reach the upper-left corner and thus the ball of the thumb may erroneously touch a position closer to the user than the upper-left corner. That is, enlargement of the smartphone screen improves visibility but may reduce usability.

In view of the foregoing, it is desirable to provide a portable electronic device and a control program which may improve usability.

### SUMMARY

According to an aspect of the invention, a portable electronic device includes a touchscreen, and a processor, wherein when the processor detects a touch on the touchscreen, the processor makes one of first and second changes or determines a display position of a menu on the touchscreen based on a position on which the touch has actually been made and a state of rotation of the portable electronic device at a certain period preceding the touch, the first change being a change where a touch position is changed from the position on which the touch has actually been made, the second change being a change where a position of a touch detection region on the touchscreen is changed from a reference position.

### BRIEF DESCRIPTION OF DRAWINGS

FIG. 1 is a diagram illustrating an example hardware configuration of a portable electronic device of a first embodiment;
FIG. 2 is a diagram illustrating rotation angles of the first embodiment;
FIG. 3 is a diagram illustrating one example of x-y coordinates of a touchscreen of the first embodiment;
FIG. 4 is a diagram illustrating one example of a condition table of the first embodiment;
FIG. 5 is a diagram illustrating one example of a coordinate calculation table of the first embodiment;
FIG. 6 is a diagram illustrating an operation of the portable electronic device of the first embodiment;
FIG. 7 is a graph illustrating one example of histories of pitch and roll angles of the first embodiment;
FIG. 8 is a flowchart illustrating a process performed by the portable electronic device of the first embodiment;
FIG. 9 is a diagram illustrating an operation of a portable electronic device of a second embodiment;
FIG. 10 is a diagram illustrating one example of a coordinate calculation table of the second embodiment;
FIG. 11 is a diagram illustrating one example of a condition table of a third embodiment;
FIG. 12 is a diagram illustrating an operation of a portable electronic device of the third embodiment;
FIG. 13 is a diagram illustrating the operation of the portable electronic device of the third embodiment;
FIG. 14 is a diagram illustrating the operation of the portable electronic device of the third embodiment; and
FIG. 15 is a flowchart illustrating a process performed by the portable electronic device of the third embodiment.

### DESCRIPTION OF EMBODIMENTS

Since the smartphone as the touchscreen-equipped portable electronic device has disadvantages as described in BACKGROUND, it is desired to provide a portable electronic device which may improve usability and a control method.

Hereafter, embodiments of a portable electronic device, a control method, and control program will be described in detail with reference to the accompanying drawings. However, the portable electronic device, the control method, and the control program in the present application are not limited to the embodiments. The same components and steps are given the same reference signs throughout the embodiments and will not be described repeatedly.

### [First Embodiment]

### <Hardware Configuration of Portable Electronic Device>

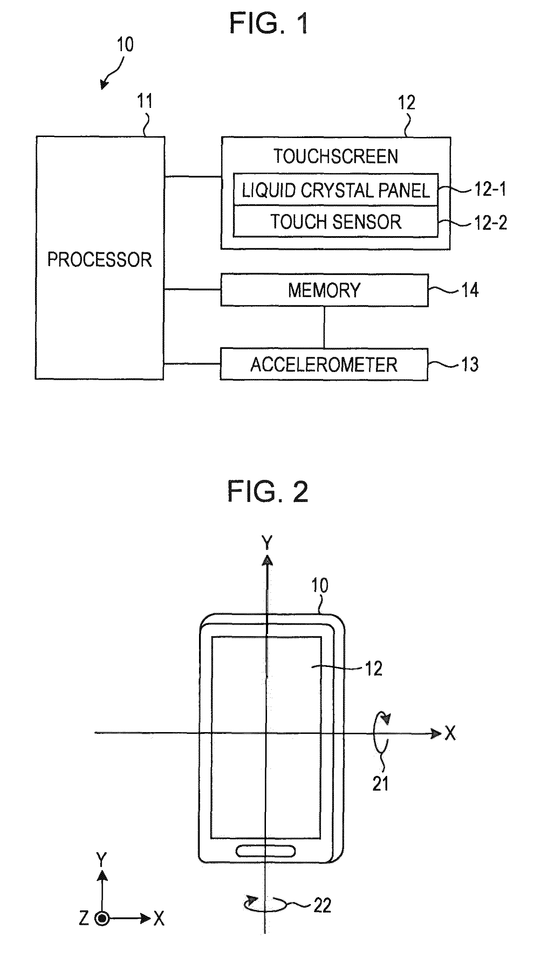

FIG. 1 is a diagram illustrating an example hardware configuration of a portable electronic device of a first embodiment. In FIG. 1, a portable electronic device 10 includes a processor 11, a touchscreen 12, an accelerometer 13, and a memory 14. The portable electronic device 10 is a device which the user may operate with one hand and is, for example, a smartphone, a small tablet terminal which the user may grasp with one hand, or the like.

The processor 11 performs various types of processes in the portable electronic device 10. In particular, the processor 11 detects a touch on the touchscreen 12 and performs a process corresponding to the touch position. The processor 11 is, for example, a central processing unit (CPU), a digital signal processor (DSP), a field programmable gate array (FPGA), or the like.

The touchscreen 12 includes a liquid crystal panel 12-1 and a touch sensor 12-2 and is mounted on the front surface of the portable electronic device 10. The liquid crystal panel 12-1 and the touch sensor 12-2 are stacked. The liquid crystal panel 12-1 displays various kinds of information. The touch sensor 12-2 converts a touch position on the touchscreen 12 into coordinate values and outputs them to the processor 11.

The accelerometer 13 detects a "pitch angle" and a "roll angle" as a "rotation angles" of the portable electronic device 10.

The memory 14 stores various types of programs, histories of the rotation angles of the portable electronic device 10, and the like. The memory 14 is, for example, a random access memory (RAM) such as a synchronous dynamic random access memory (SDRAM), a read only memory (ROM), a flash memory, or the like.

### <Operation of Portable Electronic Device>

FIG. 2 is a diagram illustrating rotation angles of the first embodiment.

In the present embodiment, as illustrated in FIG. 2, the touchscreen-mounted surface of the portable electronic device 10 is oriented upward (that is, in the positive direction of a z-axis); an "x-axis" is set in the short-length direction of the portable electronic device 10; and a "y-axis" is set in the long-length direction thereof. The short-length direction of the portable electronic device 10 corresponds to that of the touchscreen 12, and the long-length direction of the portable electronic device 10 corresponds to that of the touchscreen 12. The direction of the x-axis toward the right side of the touchscreen-mounted surface is defined as the positive direction thereof, and the direction of the y-axis toward the upper side of the touchscreen-mounted surface is defined as the positive direction thereof.

Further, as illustrated in FIG. 2, rotation 21 about the x-axis is defined as "pitch rotation," and rotation 22 about the y-axis as "roll rotation." That is, pitch rotation is rotation where the portable electronic device 10 is rotated longitudinally, and roll rotation is rotation where the portable electronic device 10 is rotated laterally as illustrated in FIG. 2. Further, the state in which the portable electronic device 10 is placed horizontally with the touchscreen-mounted surface oriented upward is defined as the reference state of the portable electronic device 10. The angle formed between the touchscreen-mounted surface and the horizontal plane when the portable electronic device 10 in the reference state is pitched is defined as a "pitch angle." The angle formed between the touchscreen-mounted surface and the horizontal plane when the portable electronic device 10 in the reference state is rolled is defined as a "roll angle". The direction in which the upper edge and lower edge of the portable electronic device 10 are rotated downward (that is, in the negative direction of the z-axis) and upward (that is, in the positive direction of the z-axis), respectively, about the x-axis is defined as the positive direction of the pitch angle. The direction in which the left edge and right edge of the portable electronic device 10 are rotated downward (that is, in the negative direction of the z-axis) and upward (that is, in the positive direction of the z-axis), respectively, about the y-axis is defined as the positive direction of the roll angle. The accelerometer 13 detects pitch and roll angles at predetermined time intervals (for example, at intervals of 100 ms) and outputs them to the processor 11, as well as sequentially records them in the memory 14 in such a manner that they are associated with the respective detection times. Accordingly, histories of the pitch and roll angles, that is, histories of rotation of the portable electronic device 10 are recorded in the memory 14.

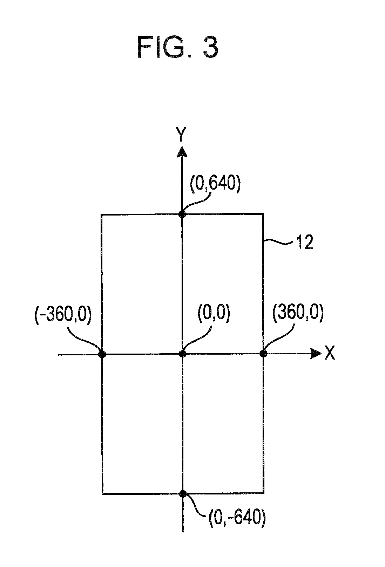

FIG. 3 is a diagram illustrating one example of x-y coordinates related to the touchscreen of the first embodiment. The x-y coordinate values in the entire region of the touchscreen 12 are determined as illustrated in FIG. 3. Specifically, assuming that the center of the touchscreen 12 is the origin (0,0), the x coordinate value is any value between -360 and 360 inclusive, and the y coordinate value is any value between -640 and 640 inclusive. The touch sensor 12-2 outputs data related to the coordinates of a touch position (may be referred to as the "touch coordinates") on the touchscreen 12 to the processor 11.

Here, assume that the user is located on the negative side of the y-axis of the portable electronic device 10 including the large-area touchscreen 12 while oriented to the positive side of the y-axis and then operates the portable electronic device 10 by grasping the lower portion thereof with the right hand and touching the touchscreen 12 with the thumb. In this case, when the user tries to touch, with the thumb, an icon displayed near the upper edge of the touchscreen 12, the tip of the thumb may not reach the icon. For this reason, the user tends to pitch the portable electronic device 10 in the negative direction so that the icon, which is distant from the thumb, comes close to the thumb.

Similarly, when the user tries to touch, with the thumb, an icon displayed near the left edge of the touchscreen 12, the tip of the thumb may not reach the icon. For this reason, the user tends to roll the portable electronic device 10 in the negative direction so that the icon, which is distant from the thumb, comes close to the thumb.

Further, even when the user pitches or rolls the portable electronic device 10 in the negative direction as described above, the tip of the thumb may not reach the icon and thus the user may touch, with the ball of the thumb, a position which is closer to the thumb than the actual position of the icon. That is, the user who is operating the portable electronic device 10 including the large-area touchscreen 12 with the thumb of one hand may touch a position which is closer to the user than the position of the desired icon.

In view of the foregoing, when the processor 11 detects a touch on the touchscreen 12, the processor 11 changes the touch position from the position on which the touch has actually been made (hereafter referred to as the "actually touched position"), based on the actually touched position and the rotation state of the portable electronic device 10 at a predetermined period preceding the touch. The phase "at a predetermined period preceding the touch" refers to, for example, "at a period immediately preceding the touch". Hereafter, there will be described a case where a process corresponding to the rotation state at a predetermined period immediately preceding the touch is performed.

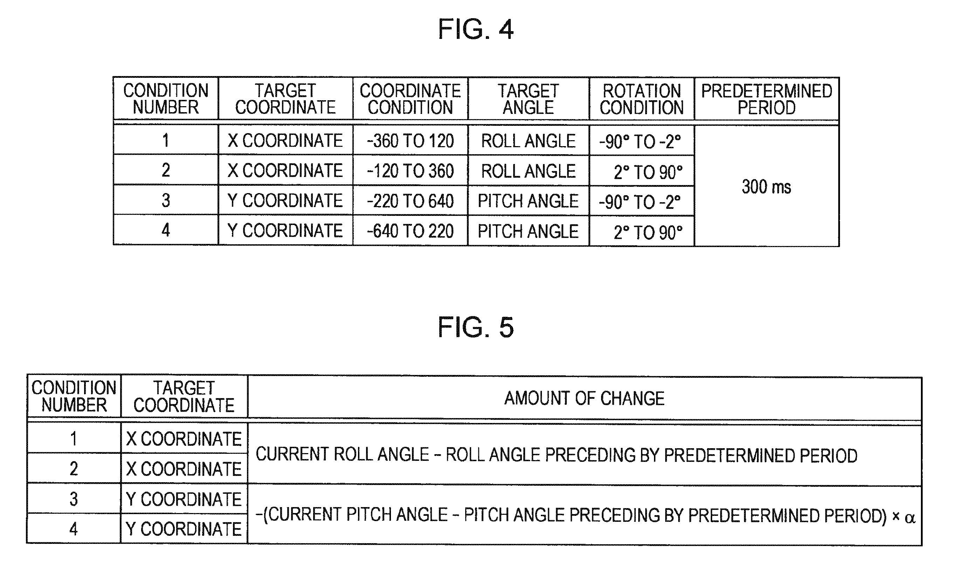

FIG. 4 is a diagram illustrating one example of a condition table of the first embodiment. FIG. 5 is a diagram illustrating one example of a coordinate calculation table of the first embodiment. The condition table of FIG. 4 and the coordinate calculation table of FIG. 5 are stored as data in the memory 14.

When the processor 11 detects a touch on the touchscreen 12, the processor 11 acquires the touch coordinates from the touch sensor 12-2. The touch coordinates acquired from the touch sensor 12-2 represent the actually touched position. The processor 11 also refers to the memory 14 to acquire the rotation state at a period immediately preceding the touch. For example, the processor 11 acquires, as the pitch state, the difference between the pitch angle at the time when the touch has been detected (hereafter referred to as the "touch detection time") and the pitch angle at a time preceding the touch detection time by a "predetermined period". The processor 11 also acquires, as the roll state, the difference between the roll angle at the touch detection time and the roll angle at the time preceding the touch detection time by the "predetermined period". When the pitch and roll angles are recorded in the memory 14 at intervals of 100 ms, the "predetermined period" is set to, for example, 300 ms. The processor 11 then determines whether the combination of the touch coordinates acquired from the touch sensor 12-2 and the rotation state at the period immediately preceding the touch satisfies any of the condition numbers set in the condition table of FIG. 4.

For example, when the x coordinate value of the touch coordinates (x,y) falls within the range of -360 to 120 (that is, within the left region of the touchscreen 12) and when the amount of roll rotation falls within the range of-90° to -2°, the processor 11 determines that the combination satisfies the condition number "1". The processor 11 then determines that the user is grasping the portable electronic device 10 with the right hand.

When the x coordinate value of the touch coordinates (x,y) falls within the range of -120 to 360 (that is, within the right region of the touchscreen 12) and when the amount of roll rotation falls within the range of 2° to 90°, the processor 11 determines that the combination satisfies the condition number "2". The processor 11 then determines that the user is grasping the portable electronic device 10 with the left hand.

When the x coordinate value of the touch coordinates (x,y) falls within the range of -220 to 640 (that is, within the upper region of the touchscreen 12) and when the amount of pitch rotation falls within the range of-90° to -2°, the processor 11 determines that the combination satisfies the condition number "3".

When the x coordinate value of the touch coordinates (x,y) falls within the range of -640 to 220 (that is, within the lower region of the touchscreen 12) and when the amount of pitch rotation falls within the range of 2° to 90°, the processor 11 determines that the combination satisfies the condition number "4".

When the combination of the touch coordinates and the rotation state at the period immediately preceding the touch satisfies any of the conditions numbers 1 to 4 as described above, the processor 11 determines the amount of change of the touch position based on the satisfied condition number and the coordinate calculation table of FIG. 5. Specifically, when the combination satisfies the condition number "1" or "2", the processor 11 changes the x-coordinate value of the touch coordinates (x,y) by an amount calculated by "current roll angle - roll angle preceding by predetermined period". When the combination satisfies the condition number "3" or "4", the processor 11 changes the y-coordinate value of the touch coordinates (x,y) by an amount calculated by "-(current pitch angle - pitch angle preceding by predetermined period)×α". The processor 11 then performs a process corresponding to the changed touch position.

The expression "current roll angle - roll angle preceding by predetermined period" refers to the amount of roll at the period immediately preceding the touch. The expression "current pitch angle - pitch angle preceding by predetermined period" refers to the amount of pitch at the period immediately preceding the touch. That is, the processor 11 determines the amount of change of the touch position based on the amount of rotation of the portable electronic device 10. As used herein, α represents a coefficient for adjusting the amount of change and is preferably set based on the aspect ratio of the touchscreen 12. For example, when all coordinates on the touchscreen 12 are represented by an x-coordinate of -360 to 360 and a y-coordinate of -640 to 640 as illustrated in FIG. 3, α is preferably set to 1.77 or 1.78.

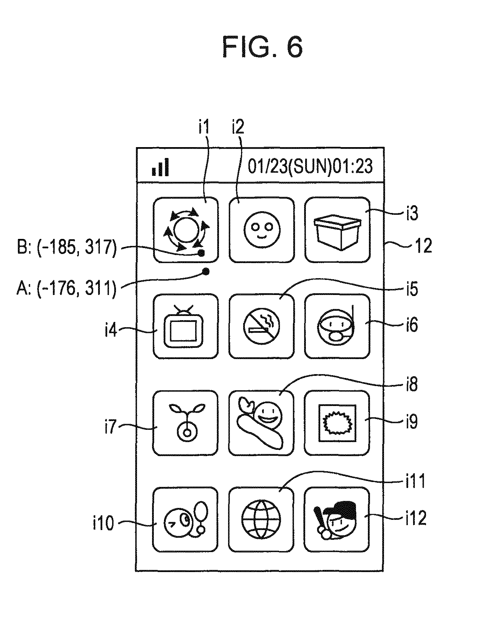

Next, an operation of the portable electronic device 10 will be described using specific numerical examples. FIG. 6 is a diagram illustrating an operation of the portable electronic device of the first embodiment.

The user grasps, with the right hand, the lower portion of the portable electronic device 10 displaying icons i1 to i12 on the touchscreen 12 as illustrated in FIG. 6 and then tries to touch the icon i1 with the thumb of the right hand. However, the user erroneously touches a position having coordinates A (-176,311), which falls outside the range of the icon i1, since the thumb is distant from the icon i1. The time when the coordinates A have been touched is "11:34:00.0"; the then roll angle is "-14°"; and the then pitch angle is "-15°". The processor 11 then acquires, from the memory 14, a roll angle "-5°" and a pitch angle "-12°" at "11:33:59.7", which precedes "11:34:00.0" by 300 ms (that is, by the predetermined period). The processor 11 then calculates the amount of roll rotation at the period immediately preceding the touch, "-14°-(-5°)=-9°", and the amount of pitch rotation at the period immediately preceding the touch, "-15°-(-12°)=-3°", as the rotation state at the period immediately preceding the touch. The coordinates A (-176,311), which are the actually touched position, the amount of roll rotation at the period immediately preceding the touch, -9°, and the amount of pitch rotation at the period immediately preceding the touch, -3°, satisfy the condition numbers "1" and "3" of the condition numbers 1 to 4 illustrated in FIG. 4.

The processor 11 then calculates the amount of change of the touch position based on the satisfied condition numbers "1" and "3" and the coordinate calculation table of FIG. 5. Specifically, the processor 11 calculates the amount of change of the x-coordinate, "-14-(-5)=-9". The processor 11 also calculates the amount of change of the y-coordinate, "-(-15-(-12))x2=6". Note that α is set to 2 to simplify the description. Then, the x-coordinate value of the changed touch position, "-176+(-9)=-185", and the y-coordinate value thereof, "311+6=317", are obtained. Coordinates B (-185,317) of the changed touch position fall within the range of the icon i1. As seen above, when the processor 11 detects the touch on the touchscreen 12, it changes the touch position from the coordinates A (-176,311), which are the actually touched position, to the coordinates B (-185,317). Thus, even when the user actually touches the position having the coordinates A (-176,311), he or she may touch the icon i1, and the processor 11 determines that the icon i1 has been touched and then performs a process corresponding to a touch on the icon i1.

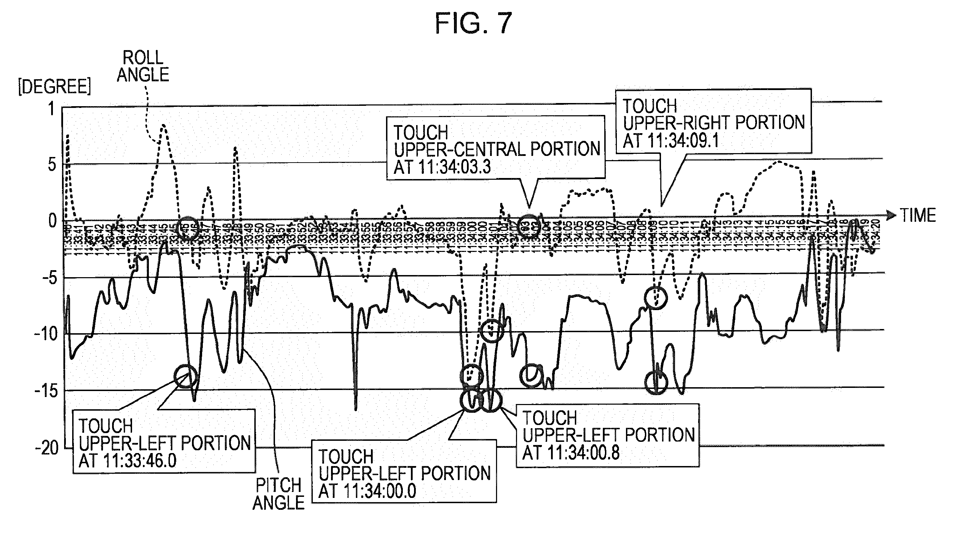

Next, a case where the touch position is changed will be described using histories of the pitch and roll angles actually recorded in the memory 14. FIG. 7 is a graph illustrating one example of histories of the pitch and roll angles of the first embodiment.

As illustrated in FIG. 7, the upper-left portion of the touchscreen 12 is touched at the times 11:33:46.0, 11:34:00.0, and 11:34:00.8. For example, a range represented by x-coordinate values -360 to 120 and y-coordinate values - 220 to 640 is defined as the range of "the upper-left portion of the touchscreen 12". Accordingly, the coordinate conditions of the condition numbers 1 and 3 in FIG. 4 are satisfied at the times 11:33:46.0, 11:34:00.0, and 11:34: 00.8. Further, during periods immediately preceding these times, for example, during periods of 300 ms preceding these times, both roll and pitch rotation change in the negative direction, and the roll rotation and the pitch rotation satisfy the condition number 1 in FIG. 4 and the condition number 3 in FIG. 4, respectively. Specifically, the condition numbers whose coordinate and rotation conditions both are satisfied at the times 11:33:46.0, 11:34:00.0, and 11:34:00.8 are the condition numbers 1 and 3. For this reason, the touch positions at the times 11:33:46.0, 11:34:00.0, and 11:34:00.8 are changed from the actually touched positions to upper-left positions.

Then, an upper-central portion of the touchscreen 12 is touched at the time 11:34:03.3 in FIG. 7. For example, a range represented by x-coordinate values -120 to 120 and y-coordinate value -220 to 640 is defined as the range of "the upper-central portion of the touchscreen 12". Accordingly, the coordinate conditions of the condition numbers 1, 2, and 3 in FIG. 4 are satisfied at the time 11:33:03.3. During the period immediately preceding the time 11:34:03.3, for example, during the period of 300 ms preceding this time, the pitch rotation changes in the negative direction and satisfies the condition number 3 in FIG. 4, while the positive roll rotation does not satisfy the condition number 2 of FIG. 4. That is, the condition number whose coordinate and rotation conditions are both satisfied at the time 11:34:03.3 is the condition number 3. For this reason, the processor 11 changes the touch position at the time 11:34:03.3 from the actually touched position to an upper position.

Then, an upper- central portion of the touchscreen 12 is touched at the time 11:34:09.1 in FIG. 7. For example, a range represented by x-coordinate values -120 to 360 and y-coordinate values -220 to 640 is defined as the range of "the upper-right portion of the touchscreen 12". Accordingly, the coordinate conditions of the condition numbers 2 and 3 of FIG. 4 are satisfied at the time 11:34:09.1. Further, during the period immediately preceding the time 11:34:09.1, for example, during the period of 300 ms preceding this time, both the roll and pitch rotation change in the negative direction. Accordingly, the roll rotation condition of the condition number 1 in FIG. 4 and the pitch rotation condition of the condition number 3 in FIG. 4 are satisfied. That is, the condition number whose coordinate and rotation conditions are both satisfied at the time 11:34:09.1 is the condition number 3. For this reason, the processor 11 changes the touch position at the time 11:34:09.1 from the actually touched position to an upper position.

As seen above, the processor 11 moves the touch position using the condition table illustrated in FIG. 4 and the coordinate calculation table illustrated in FIG. 5. When the coordinate and rotation conditions of only the condition number 1 of the condition numbers 1 to 4 are satisfied, the processor 11 moves the touch position leftward; when the coordinate and rotation conditions of only the condition number 2 are satisfied, the processor 11 moves the touch position rightward; when the coordinate and rotation conditions of only the condition number 3 are satisfied, the processor 11 moves the touch position upward; when the coordinate and rotation conditions of only the condition number 4 are satisfied, the processor 11 moves the touch position downward; when the coordinate and rotation conditions of both the condition numbers 1 and 3 are satisfied, the processor 11 moves the touch position upper-leftward; when the coordinate and rotation conditions of both the condition numbers 1 and 4 are satisfied, the processor 11 moves the touch position lower-leftward; when the coordinate and rotation conditions of both the condition numbers 2 and 3 are satisfied, the processor 11 moves the touch position upper-rightward; and when the coordinate and rotation conditions of both the condition numbers 2 and 4 are satisfied, the processor 11 moves the touch position lower-rightward.

### <Process by Portable Electronic Device>

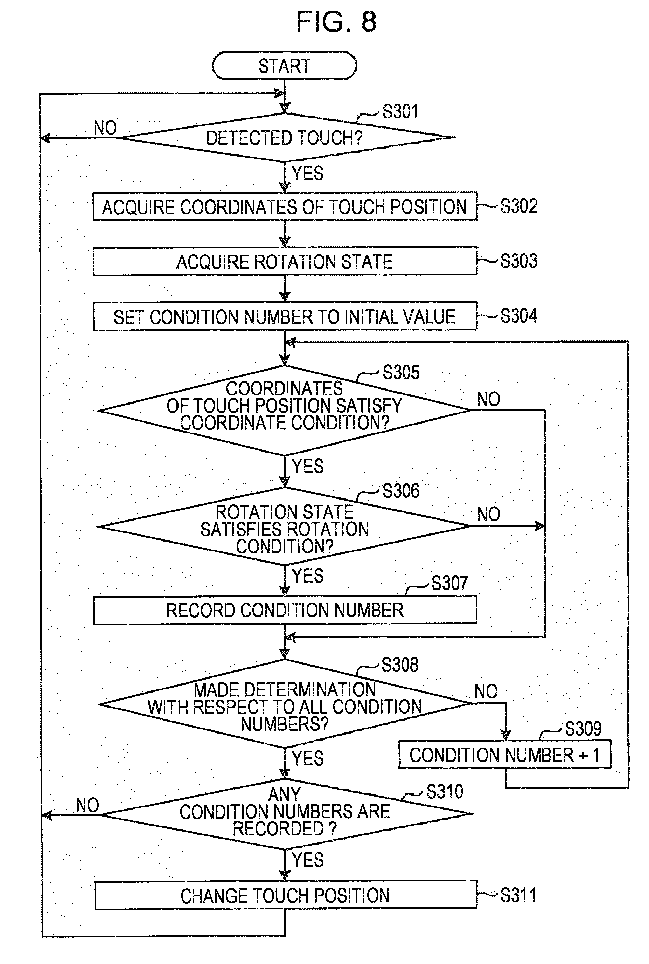

FIG. 8 is a flowchart illustrating a process performed by the portable electronic device of the first embodiment. The process illustrated by the flowchart of FIG. 8 starts with power-on of the portable electronic device 10 and ends with power-off thereof.

First, the processor 11 determines whether it has detected a touch on the touchscreen 12 (step S301). When it has detected no touch on the touchscreen 12 (step S301: No), the processor 11 repeats the determination of step S301.

When a touch on the touchscreen 12 has detected (step S301: Yes), the processor 11 acquires the coordinates of the touch position from the touch sensor 12-2 (step S302).

Then the processor 11 acquires the rotation state of the portable electronic device 10 at the period immediately preceding the touch based on histories of the pitch and roll angles recorded in the memory 14 (step S303).

Then the processor 11 sets the condition number to the initial value (step S304). When the condition table illustrated in FIG. 4 is used, the condition number "1" serves as the initial value.

Then the processor 11 determines whether the coordinates of the touch position satisfy the coordinate condition of the condition number 1 illustrated in FIG. 4 (step S305). The processor 11 also determines whether the rotation state of the portable electronic device 10 satisfies the rotation condition of the condition number 1 illustrated in FIG. 4 (step S306).

When the coordinates of the touch position satisfy the coordinate condition of the condition number 1 (step S305: Yes) and when the rotation state of the portable electronic device 10 satisfies the rotation condition of the condition number 1 (step S306: Yes), the processor 11 records the condition number 1 in the memory 14 (step S307), and the process proceeds to step S308.

In contrast, when the coordinates of the touch position do not satisfy the coordinate condition of the condition number 1 (step S305: No) or when the rotation state of the portable electronic device 10 does not satisfy the rotation condition of the condition number 1 (step S306: No), the processor 11 does not record the condition number 1 in the memory 14, and the process proceeds to step S308.

Then the processor 11 determines whether the determinations of steps S305 and S306 have been made with respect to all the condition numbers. When there remain condition numbers with respect to which the determinations of steps S305 and S306 have not been made yet (step S308: No), the processor 11 increments the condition number by +1 (step S309), and the process returns to step S305. Accordingly, the subsequent determinations of steps S305 and S306 are made with respect to the condition number 2 illustrated in FIG. 4. In this way, steps S305 to S308 are repeated until the determinations of steps S305 and S306 are made with respect to all the condition numbers illustrated in FIG. 4. For example, when the condition table illustrated in FIG. 4 is used, steps S305 to S308 are repeated four times.

When the determinations of steps S305 and S306 are made with respect to all the condition numbers (step S308: Yes), the processor 11 determines whether any condition numbers are recorded in the memory 14 (step S310). When no condition number is recorded in the memory 14 (step S310: No), the process returns to step S301, and the processor 11 waits for a subsequent touch.

In contrast, when any condition number is recorded in the memory 14 (step S310: Yes), the processor 11 calculates the amount of change of the touch position based on the recorded condition number and the coordinate calculation table illustrated in FIG. 5 and then changes the touch position by the amount of change calculated (step S311). After the touch position is changed, the process returns to step S301, and the processor 11 waits for a subsequent touch.

The condition number is recorded in the memory 14 in step S307. Since the condition number is small in data amount, it may be recorded in the function parameter rather than being recorded in the memory 14.

As described above, in the present embodiment, the portable electronic device 10 includes the touchscreen 12 and the processor 11. When the processor 11 detects a touch on the touchscreen 12, it changes the touch position from the actually touched position based on the actually touched position and the rotation state of the portable electronic device 10 at the period immediately preceding the touch.

Since the touch position is changed based on the actually touched position and the rotation state of the portable electronic device 10 at the period immediately preceding the touch, it is possible to properly determine whether the actually touched position is the position desired by the user and to change the touch position. For example, it is possible to properly determine whether the user who is operating the portable electronic device 10 with one hand has touched a position closer than the icon desired by the user and to change the touch position to a position further than that position. For example, it is also possible to properly determine whether the user who is operating the portable electronic device 10 with one hand has touched a position further than the icon desired by the user due to the parallax of the icon between before and after the rotation of the portable electronic device 10 and to change the touch position to a position closer than that position. As seen above, even when the user touches a position different from the position of the desired icon, it is possible to regard the touch as a touch on the desired icon and to perform a process intended by the user. As a result, according to the present embodiment, it is possible to reduce erroneous touches on the touchscreen 12 by the user and to improve the usability of the portable electronic device 10.

In the present embodiment, when the actually touched position and the rotation state of the portable electronic device 10 each satisfy any of the predetermined conditions, the touch position is changed.

Thus, it is possible to determine whether the touch position has to be changed and thus to reduce unnecessary change of the touch position. Further, the touch position may be changed by moving the touch position in a proper direction corresponding to the predetermined condition.

Further, in the present embodiment, the processor 11 determines the amount of change of the touch position based on the amount of rotation of the portable electronic device 10.

This is because a larger amount of rotation of the portable electronic device 10 is presumed to make larger the difference between the desired touch position and the actually touched position. In this way, a proper amount of change of the touch position may be determined.

### [Second Embodiment]

### <Operation of Portable Electronic Device>

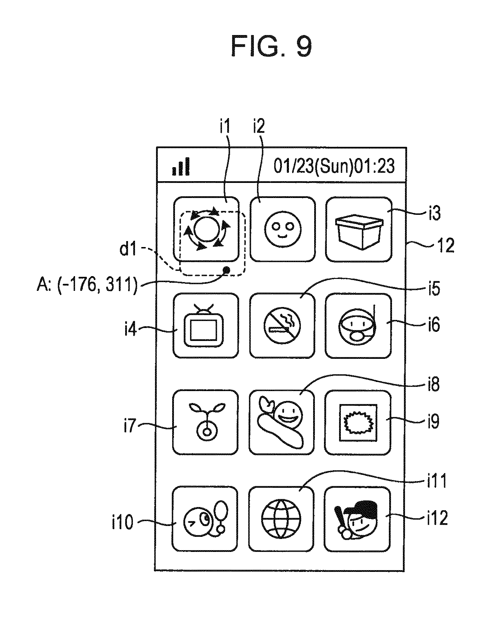

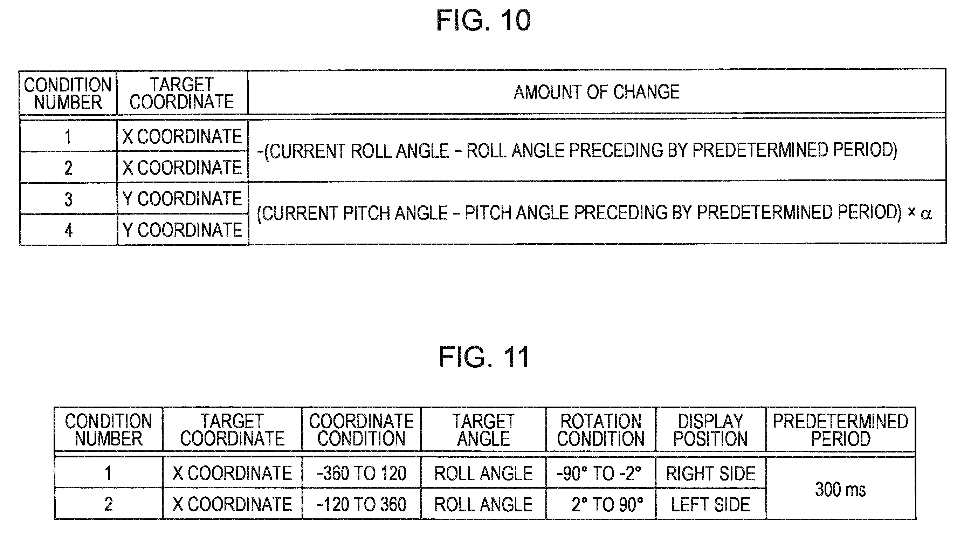

In the first embodiment, the touch position is changed from the actually touched position. In the present embodiment, unlike in the first embodiment, the position of the touch detection region of an icon on a touchscreen 12 is changed from a reference position. FIG. 9 is a diagram illustrating an operation of a portable electronic device of a second embodiment. FIG. 10 is a diagram illustrating one example of a coordinate calculation table of the second embodiment.

As in the first embodiment, the user who is grasping, with the right hand, the lower portion of a portable electronic device 10 displaying icons i1 to i12 on a touchscreen 12 as illustrated in FIG. 9 tries to touch the icon i1 with the thumb of the right hand. The reference positions of the touch detection regions of the icons i1 to i12 match the display positions of the icons i1 to i12. However, the user erroneously touches the position of coordinates A (-176,311), which falls outside the range of the icon i1, since the thumb is distant from the icon i1. The time when the coordinates A has been touched is "11:34:00.0"; the then roll angle is "-14°"; and the then pitch angle is "-15°". The processor 11 then acquires, from the memory 14, a roll angle "-5°" and a pitch angle "-12°" at "11:33:59.7", which precedes "11:34:00.0" by 300 ms (that is, by a predetermined period). The processor 11 then calculates the amount of roll rotation at the period immediately preceding the touch, "-14°-(-5°)=-9°", and the amount of pitch at the period immediately preceding the touch, "-15°-(-12°)=-3°", as the rotation state at the period immediately preceding the touch. The coordinates A (-176,311), which are the actually touched position, the amount of roll rotation at the period immediately preceding the touch, -9°, and the amount of pitch rotation at the period immediately preceding the touch, -3°, satisfy the condition numbers "1" and "3" of the condition numbers 1 to 4 illustrated in FIG. 4.

The processor 11 then calculates the amount of change of the position of the touch detection region of the icon i1 based on the satisfied condition numbers "1" and "3" and the coordinate calculation table of FIG. 10. Specifically, the processor 11 calculates the amount of change of the x-coordinate, "-(-14-(-5))=9", and the amount of change of the y-coordinate, "((-15)-(-12))x2=-6". Note that α is set to 2 to simplify the description.

The processor 11 then moves the positions of the touch detection regions of the icons i1 to i12 from the reference positions (that is, the display positions of the icons i1 to i12) by "9" on the x-axis and "-6" on the y-axis. Note that in order to simplify the description, FIG. 9 illustrates only an aspect where the position of the touch detection region of the icon i1 is changed. In FIG. 9, the touch detection region of the icon i1 is changed to a region d1, which is obtained by moving the display region of the icon i1 by "9" on the x-axis and "-6" on the y-axis. As a result, the coordinates A (-176,311) fall within the touch detection region of the icon i1. As seen above, in the present embodiment, when the processor 11 detects a touch on the touchscreen 12, it changes the position of the touch detection region of the icon on the touchscreen 12 from the reference position based on the actually touched position and the rotation state of the portable electronic device 10 at the period immediately preceding the touch. Thus, even when the user actually touches the position of coordinates A (-176,311), he or she may touch the icon i1. The processor 11 determines that the icon i1 has been touched and performs a process corresponding to a touch operation on the icon i1.

Further, in the present embodiment, when the actually touched position and the rotation state of the portable electronic device 10 each satisfy any of the predetermined conditions, the processor 11 changes the position of the touch detection region of the icon from the reference position.

Further, in the present embodiment, the processor 11 determines the amount of change of the position of the touch detection region of the icon based on the amount of rotation of the portable electronic device 10.

As seen above, even when the position of the touch detection region of the icon on the touchscreen 12 is changed from the reference position rather than changing the touch position from the actually touched position, effects similar to those of the first embodiment may be obtained.

### [Third Embodiment]

### <Operation of Portable Electronic Device>

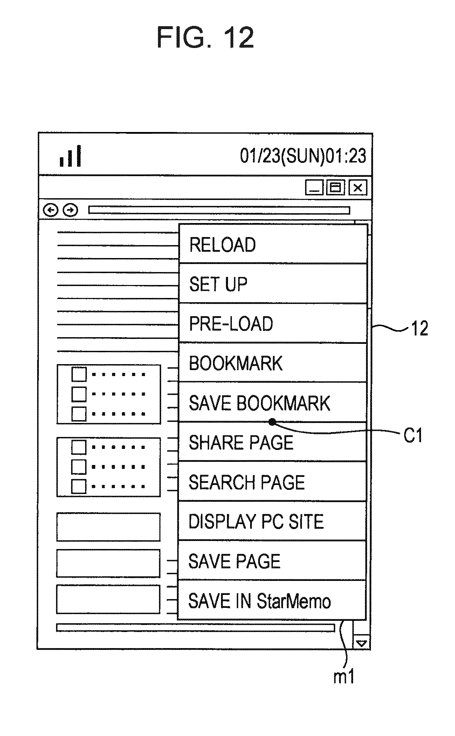

In the present embodiment, when the processor 11 detects a touch on the touchscreen 12, it determines the display position of the menu on the touchscreen 12 based on the actually touched position and the rotation state of the portable electronic device 10 at the period immediately preceding the touch. FIG. 11 is a diagram illustrating one example of a condition table of a third embodiment. FIGs. 12 to 14 are diagrams illustrating an operation of a portable electronic device of the third embodiment. Hereafter, an operation of a portable electronic device 10 will be described using two specific numerical examples.

### <Numerical Example 1>

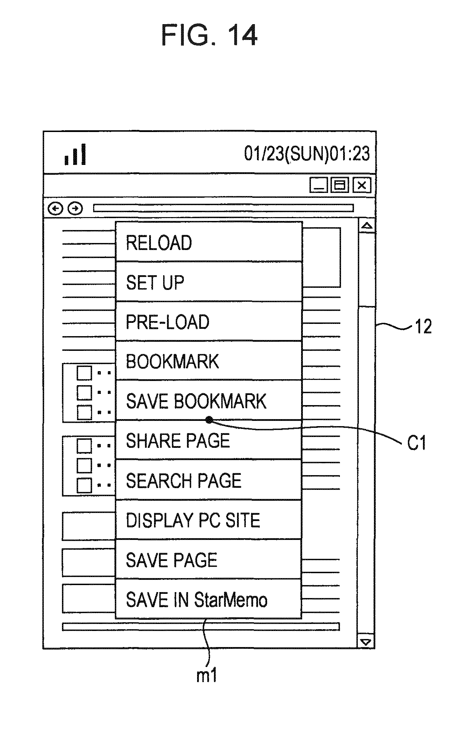

The user who is grasping the portable electronic device 10 with one of the left and right hands touches the position of coordinates C (-185,317) on the touchscreen 12. The time when the coordinates C has been touched is "11:34:00.0", and the then roll angle is "-14°". The processor 11 then acquires, from the memory 14, a roll angle "-5°" at "11:33:59.7", which precedes "11:34:00.0" by 300 ms (that is, by a predetermined period). The processor 11 then calculates the amount of roll rotation at the period immediately preceding the touch, "-14°-(-5°)=-9°", as the rotation state at the period immediately preceding the touch. The x-coordinate value of the coordinates C, -185, and the amount of roll rotation at the period immediately preceding the touch, -9°, satisfy the condition number "1" of the condition numbers 1 and 2 illustrated in FIG. 11. The processor 11 then determines that the user is grasping the portable electronic device 10 with the right hand and that the display position of a menu m1 is preferably located "on the right side". Then, as shown in FIG. 14, the processor 12 displays the menu m1 on the right side of the touchscreen 12. The phase "on the right side" means that the center C1 of the menu m1 is located within a range on the touchscreen 12 in which the x-coordinate value is greater than the median value "0".

### <Numerical Example 2>

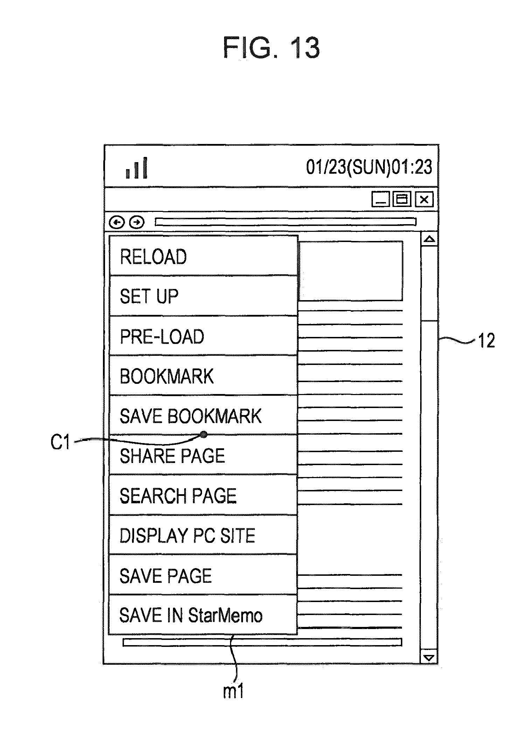

The user who is grasping the portable electronic device 10 with one of the left and right hands touches the position of coordinates D (0,15) on the touchscreen 12. The time when the coordinates D have been touched is "11:40:00.0", and the then roll angle is "12°". The processor 11 then acquires, from the memory 14, a roll angle "5°" at "11:39:59.7", which precedes "11:40:00.0" by 300 ms (that is, by the predetermined period). The processor 11 then calculates the amount of roll rotation at the period immediately preceding the touch, "12°-5°=7°", as the rotation state at the period immediately preceding the touch. The x-coordinate value of the coordinates D, 0, and the amount of roll rotation at the period immediately preceding the touch, 7°, satisfy the condition number "2" of the condition numbers 1 and 2. The processor 11 then determines that the user is grasping the portable electronic device 10 with the left hand and that the display position of the menu m1 is preferably located "on the left side". Then, as shown in FIG. 13, the processor 12 displays the menu m1 on the left side of the touchscreen 12. The phase "on the left side" means that the center C1 of the menu m1 is located within a range on the touchscreen 12 in which the x-coordinate value is smaller than the median value "0".

Note that when the x-coordinate value of the touch coordinates does not satisfy any of the coordinate conditions illustrated in FIG. 11 or when the amount of roll rotation at the period immediately preceding the touch does not satisfy any of the rotation conditions illustrated in FIG. 11, the processor 11 determines that the display position of the menu m1 is preferably located in the "center". Then, as illustrated in FIG. 14, the processor 11 displays the menu m1 in the center of the touchscreen 12. The term "center" means that the center C1 of the menu m1 is located in a position on the touchscreen 12 in which the x-coordinate value is the median value "0".

### <Process by Portable Electronic Device>

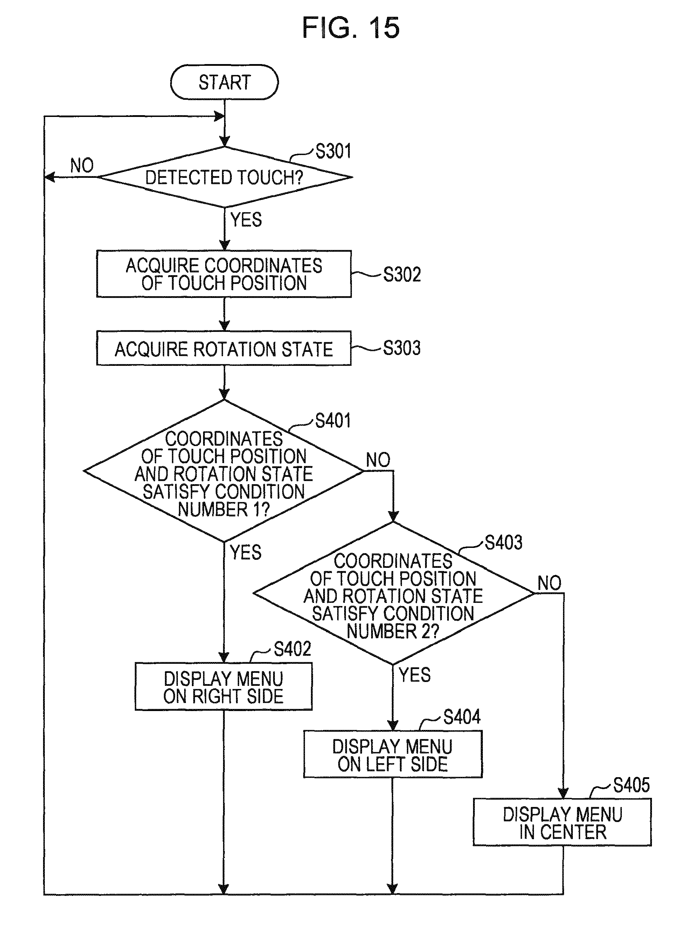

FIG. 15 is a flowchart illustrating a process performed by the portable electronic device of the third embodiment. The process shown by the flowchart of FIG. 15 starts with power-on of the portable electronic device 10 and ends with power-off thereof. Note that steps S301 to S303 in FIG. 15 are the same as those in FIG. 8 and therefore will not be described.

After acquiring the coordinates of the touch position and the rotation state of the portable electronic device 10 at the period immediately preceding the touch (steps S302, S303), the processor 11 performs steps S401 to S405 as follows.

That is, the processor 11 determines whether the coordinates of the touch position and the rotation state of the portable electronic device 10 at the period immediately preceding the touch satisfy the coordinate condition and rotation condition, respectively, of the condition number 1 illustrated in FIG. 11 (step S401).

When the coordinates of the touch position and the rotation state of the portable electronic device 10 at the period immediately preceding the touch satisfy the corresponding conditions of the condition number 1 (step S401: Yes), the processor 11 displays the menu on the right side of the touchscreen 12 (step S402).

When any of the coordinates of the touch position and the rotation state of the portable electronic device 10 at the period immediately preceding the touch does not satisfy the corresponding condition of the condition number 1 (step S401: No), the processor 11 determines whether the coordinates of the touch position and the rotation state of the portable electronic device 10 at the period immediately preceding the touch satisfy the coordinate condition and rotation condition, respectively, of the condition number 2 illustrated in FIG. 11 (step S403).

When the coordinates of the touch position and the rotation state of the portable electronic device 10 at the period immediately preceding the touch satisfy the corresponding conditions of the condition number 2 (step S403: Yes), the processor 11 displays the menu on the left side of the touchscreen 12 (step S404).

When any of the coordinates of the touch position and the rotation state of the portable electronic device 10 at the period immediately preceding the touch does not satisfy the corresponding condition of the condition number 2 (step S403: No), the processor 11 displays the menu in the center of the touchscreen 12 (step S405).

As seen above, in the present embodiment, when the processor 11 detects a touch on the touchscreen 12, it determines the display position of the menu on the touchscreen 12, based on the actually touched position and the rotation state of the portable electronic device 10 at the period immediately preceding the touch.

Thus, the processor 11 may properly determine which of the left and right hands is grasping the portable electronic device 10 and then determine the display position of the menu based on that determination. When the processor 11 determines that the right hand is grasping the portable electronic device 10, it displays the menu on the right side of the touchscreen 12; when the processor 11 determines that the left hand is grasping the portable electronic device 10, it displays the menu on the left side of the touchscreen 12. As a result, according to the present embodiment, it is possible to improve the usability of the portable electronic device 10, which is often grasped with one of the left and right hands.

### Other Embodiments

1. The above processes performed by the portable electronic device 10 may be performed by causing the processor 11 to execute control programs corresponding to the processes. For example, the control programs corresponding to the processes may be stored in the memory 14, and then read therefrom and executed by the processor 11.

2. In the first and second embodiments, assuming that the portable electronic device 10 is used in portrait orientation, the amount of change of the y-coordinate is made larger than the amount of change of the x-coordinate by using the adjustment coefficient α with respect to the amount of change of the y-coordinate. However, in the portable electronic device 10 used in landscape orientation, the amount of change of the x-coordinate may be made larger than the amount of change of the y-coordinate by using the adjustment coefficient α with respect to the amount of change of the x-coordinate. The processor 11 may also use the adjustment coefficient α with respect to the amount of change of the y-coordinate when the portable electronic device 10 is in portrait orientation and may use the adjustment coefficient α with respect to the amount of change of the x-coordinate when the portable electronic device 10 is in landscape orientation. That is, the processor 11 may change the coordinate axis to which the adjustment coefficient α is applied, based on whether the portable electronic device 10 is in portrait orientation or in landscape orientation. Note that whether the portable electronic device 10 is in portrait orientation or in landscape orientation may be detected by the accelerometer 13.

3. While the position of the touch detection region of the icon on the touchscreen 12 is changed from the reference position in the second embodiment, the touch detection region may be expanded rather than changing the position thereof. For example, in FIG. 9, the touch detection region of the icon i1 may include both the display region of the icon i1 and the region d1.

4. In the above embodiments, the pitch and roll angles of the portable electronic device 10 are detected by the accelerometer 13. Alternatively, a sensor which may detect the pitch and roll of the portable electronic device 10 may be used in place of the accelerometer 13. Use of such a sensor makes unnecessary the calculation of the pitch and roll by the processor 11.

## Claims

1. A portable electronic device comprising:
a touchscreen; and
a processor, wherein
when the processor detects a touch on the touchscreen, the processor makes one of first and second changes or determines a display position of a menu on the touchscreen based on a position on which the touch has actually been made and a state of rotation of the portable electronic device at a certain period preceding the touch, the first change being a change where a touch position is changed from the position on which the touch has actually been made, the second change being a change where a position of a touch detection region on the touchscreen is changed from a reference position.

2. The portable electronic device according to claim 1, wherein when the position on which the touch has actually been made and the state of the rotation satisfy corresponding certain conditions, the processor makes one of the first and second changes.

3. The portable electronic device according to claim 1, wherein the processor determines the amounts of the first and second changes based on the amount of the rotation.

4. The portable electronic device according to claim 2, wherein the processor determines the amounts of the first and second changes based on the amount of the rotation.

5. A computer-readable recording medium having stored therein a program for causing a computer, included in a portable device including a touchscreen, to execute a digital signature process comprising:
acquiring, when detecting a touch on the touchscreen, acquire a state of rotation of the portable electronic device during a predetermined period preceding the touch; and
making one of first and second changes or determine a display position of a menu on the touchscreen based on a position on which the touch has actually been made and the state of the rotation, the first change being a change where a touch position is changed from the position on which the touch has actually been made, the second change being a change where a position of a touch detection region on the touchscreen is changed from a reference position.

6. A control method of a portable electronic device, the portable electronic device including a touchscreen and a processor, the control method comprising:
acquiring, by the portable electronic device, when detecting a touch on the touchscreen, a state of rotation of the portable electronic device at a predetermined period preceding the touch; and
making one of first and second changes or determining a display position of a menu on the touchscreen based on a position on which the touch has actually been made and the state of the rotation, the first change being a change where a touch position is changed from the position on which the touch has actually been made, the second change being a change where a position of a touch detection region on the touchscreen is changed from a reference position.
